# EUROPEAN PATENT SPECIFICATION

(11) **EP 1 250 634 B1**
(45) Date of publication and mention of the grant of the patent: **07.05.2014**
(21) Application number: 01901918.1
(22) Date of filing: 10.01.2001
(51) Int. Cl.: G05D 11/13

(54) **SYSTEM AND APPARATUS FOR PROPORTIONING FLUID FLOW**
DURCHFLUSSPROPORTIONIERVERFAHREN UND -VORRICHTUNG
SYSTEME ET APPAREIL POUR FOURNIR UN ECOULEMENT DE FLUIDE

(30) Priority: 11.01.2000 US 480893
(43) Date of publication of application: 23.10.2002
(73) Proprietor: THERAKOS, INC., Exton, PA 19341 (US)
(72) Inventor: BRIGGS, Dennis, West Chester, PA 19382 (US)
(74) Representative: Bullett, Rachel Margaret
(86) International application number: PCT/US2001/000720
(87) International publication number: WO 2001/052009

(56) References cited:
- EP-A- 0 289 048
- US-A- 4 657 160
- US-A- 5 399 166
- US-A- 5 665 061

## Description

### BACKGROUND OF THE INVENTION

### Field of the Invention

The present invention relates to systems and apparatus by which one biological fluid can be accurately combined with a desired amount of another identical or different biological fluid, with the ability to maintain a desired ratio between the two biological fluids.

### Description of the Prior art

In the prior art, combining fluids has been achieved on a manual basis through trial and error or by mixing two or more pre-measured fluids together in a batch-type process without the ability to automate or regulate the mixing process on a small or large scale. These processes lack the precision and accuracy needed to achieve, monitor or adhere to a desired ratio between two fluids. The ability to accurately achieve such ratios is particularly important in medical applications. Indeed, due to the lack ofprecision and accuracy in the prior art and methodologies, accounting for small variations in the fluids due to a patient's specific needs is difficult. Some specific applications that require a mixture of fluids in a precise ratio are pheresis, chemotherapy, dialysis, and pharmaceutical or chemical manufacturing processes.
US 5,665,061 discloses a common method for collecting and mixing fluids, i.e. blood and anticoagulant. The apparatus working according to the known method comprises a pump for adjusting the flow rate of anticoagulant so that a desired ratio of said anticoagulant to the blood in a tubing segment is obtained. There is further provided a controller being connected to the pump for controlling the speed of the pump in order to achieve a predetermined infusion rate for the anti-coagulant.

US 5,665,061 discloses a blood circulation apparatus which includes a suction wand for receiving blood from a patient, a servoir for collecting received blood, a flow path between the suction wand and the reservoir, and an antigoagulant pump and line for introducing anticoagulant into the flow path upstream of the reservoir. An embodiment of the apparatus includes sensors for detecting pressure values in the flow path and in the anticoagulant line and a controller for regulating anticoagulant introduction as a function of the pressure values.

US 5,690,815 provides an automated system for processing biological fluid including a pressure differential generator, a biological fluid processing assembly including a first container operatively associated with the pressure differential generator, at least one satellite container in fluid communication with the first container and a porous medium including a leukocyte depletion medium interposed between the first container and the satellite container and a sensor downstream of the porous medium for sensing and providing a signal reflecting the presence of red blood cells downstream of the porous medium. An automated control arrangement is coupled to the sensor and at least one of the pressure differential generator and the biological fluid processing assembly to control flow between the first container and the satellite container.

EP 0477973 provides a flow meter provides a measurement of the rate of flow of a fluid into or out of a container based on a measurement of the rate of change of the weight of the container.

US 4258723 provides a collection bag system having a bag containing the anticoagulant fluid which is passed to a blood collection bag at a rate determined by the flow rate of the blood into the collection bag to maintain the ratio of anticoagulant to blood at a level to minimize the lesion of collection throughout the collection process. The blood collection bag is suspended by a spring from a blood bag stand and the anticoagulant bag is supported by the stand in a fixed position. The bags are arranged on the stand and interconnected so that flow rate of anticoagulant is dependent upon the difference in levels of the blood and anticoagulant mixture in the collection bag and the anticoagulant in the anticoagulant bag. The collection bag is suspended from the stand by a spring to gradually lower the collection bag during the collection process and thereby maintain the difference between the levels at a desired value.

The present invention provides a solution to the accuracy, precision and flexibility Problems associated with the prior art. The present invention relates to methods, apparatus and systems to control the amount of fluid mixed and to control the ratio between two or more fluids.

The method of the present invention may also comprise a feedback loop by which a desired ratio can be continually regulated and adjusted to maintain the desired ratio between fluids. In addition, the invention may also comprise a control system that controls the method and apparatus of the system and allows the collection of data related to these processes.

### SUMMARY OF THE INVENTION

The objects of the present invention include providing systems and apparatus for accurately combining and maintaining the ratio of two or more identical or different biological fluids. The present invention relates to apparatus and systems, including for example, a particular embodiment for the extracorporeal treatment of a patient's blood with an anti-coagulant, comprising the steps of determining the individual flow rates of the biological fluids, adjusting the flow rate of one biological fluid to obtain a desired ratio between the two biological fluids and maintaining this ratio throughout the process by making adjustments to fluid flow rates and pressures.

To achieve the objects and in accordance with the purpose of the invention, as embodied and broadly described herein, the present invention may include, in one or more embodiments, a method, apparatus and computer system for combining a first biological fluid with a second biological fluid to produce a mixture of the first and second biological fluids by determining the flow rates of the first and second biological fluids, adjusting the flow rate of the second biological fluid to obtain a desired ratio between the first and second fluid, and maintaining the ratio between the second and first biological fluids.

The computer system can be a computer processor with a memory which is coupled to the computer processor, and a computer process that is stored in the memory that includes obtainers and controllers configured to obtain, adjust and control flow rates, as well as maintain the ratio of blood to anti-coagulant.

Maintaining the ratio between the first and second biological fluid may also involve monitoring the flow rate of the second biological fluid to maintain the desired ratio.

In an alternative embodiment the first biological fluid may be the same biological fluid as the second biological fluid. In yet another alternative embodiment, either biological fluid may be blood or anti-coagulant.

Additionally, adjusting the flow of the second biological fluid may involve increasing or decreasing the flow rate of the fluid manually or through a computer system using a pressure means. The pressure means may be composed of one or more of the following: a positive pressure source, a negative pressure source, a pressure pump, a valving means and/or a pressure indicator means.

Also, adjusting the flow of the second biological fluid may involve increasing or decreasing the flow rate of the biological fluid manually or through a computer system using a valving means. The valving means may be calibrated prior to the adjusting process.

Additionally, a load cell may be used to adjust the flow rate of the second biological fluid and/or to determine the flow rates of both the first and second biological fluids. A flow measurement means may also be used determine the flow rates of both the first and second biological fluids.

Alternatively, the method, apparatus and computer system used to adjust the flow of the second biological fluid or maintain the flow rate of first biological fluid or maintain the flow rate of the second biological fluid into the first biological fluid may be a controller that communicates with the flow measurement means, the valving means, the load cell and the pressure means. This controller may be a computer that controls the flow measurement means, the valving means, the load cell and the pressure means.

### BRIEF DESCRIPTION OF THE DRAWINGS

Fig. 1 is a general schematic diagram of the systems and apparatus of the invention.
Fig. 2 is a schematic diagram of a specific embodiment of the systems and apparatus of the present invention.
Fig. 3 is a schematic diagram of a pressure means in a specific embodiment of the present invention.
Fig. 4 is a flowchart diagram of the calibration process of a valving means for use in fluid flow proportioning.
Fig. 5 is a flowchart diagram of the calibration process of a flow measurement means for use in fluid flow proportioning.
Fig. 6 is a flowchart diagram of a flow rate measurement process.
Fig. 7 is a flowchart diagram of the flow control process for use in fluid flow proportioning.
Fig. 8 is a flowchart diagram of the calibration process of a valving means used in a specific embodiment of the present invention for use in fluid flow proportioning.
Fig. 9 is a flowchart diagram of the calibration process of a flow measurement means used in a specific embodiment of the present invention for use in fluid flow proportioning.
Fig. 10 is a flowchart diagram of a flow rate measurement process used in a specific embodiment of the present invention.
Fig. 11 is a flowchart diagram of the flow control process used in a specific embodiment of the present invention for use in fluid flow proportioning.

### DETAILED DESCRIPTION OF THE PREFERRED EMBODIMENTS

The present invention provides an improvement in accuracy, precision and flexibility over the prior art. The invention provides methods, apparatus and systems for combining a first biological fluid with a second biological fluid to produce a mixture, in a preferred embodiment, of the first and second biological fluids while adhering to a desired ratio between the first and second biological fluids. This invention is particularly useful in producing pharmaceutical or chemical preparations comprising two or more fluid ingredients that require a precise ratio between the separate fluid ingredients, and has particular applications in patient treatment regimens. Some specific applications that require a mixture of fluids in a precise ratio are pheresis, chemotherapy, dialysis and pharmaceutical or chemical preparation manufacture. The invention also provides for automation of the process to achieve, adjust and maintain the desired ratio throughout the process and to supply relevant data regarding flow rates, pressure and amount of mixture created.

Biological fluids encompass fluids that comprise, exist in or are used in or delivered to living organisms. Indeed, biological fluids may comprise pharmaceutical preparations (e.g., insulin, anti-coagulant, saline solutions, erythropoietin or morphine) or biological preparations (e.g., liposomes, plasmids or transformed cells), bodily fluids and their components, such as blood and its components, and other fluids that comprise biological components, including living organisms such as bacteria, viruses, cells or other cellular components. Biological fluids may also comprise whole blood or specific whole blood components, including red blood cells, platelets, white blood cells, precursor cells, progentior cells; prokaryotic and eukaryotic cell suspensions, including recombinant viruses; membrane vesicle preparations, including lysosomes, endosomes, caveolae, micelles and liposomes; molecular interactions including DNA-protein, RNA-protein, and protein-protein interactions; DNA preparations; RNA preparations; and protein preparations. Reference will now be made in detail to the present preferred embodiments and exemplary embodiments of the present invention, which are illustrated in the accompanying text and figures.

In a specific embodiment, the present invention relates to systems and apparatus that facilitate a process by which blood can be removed from a patient and combined with a desired controlled amount of another biological fluid, wherein the proportion or ratio of blood to the biological fluid, such as anti-coagulant, may be controlled and maintained.

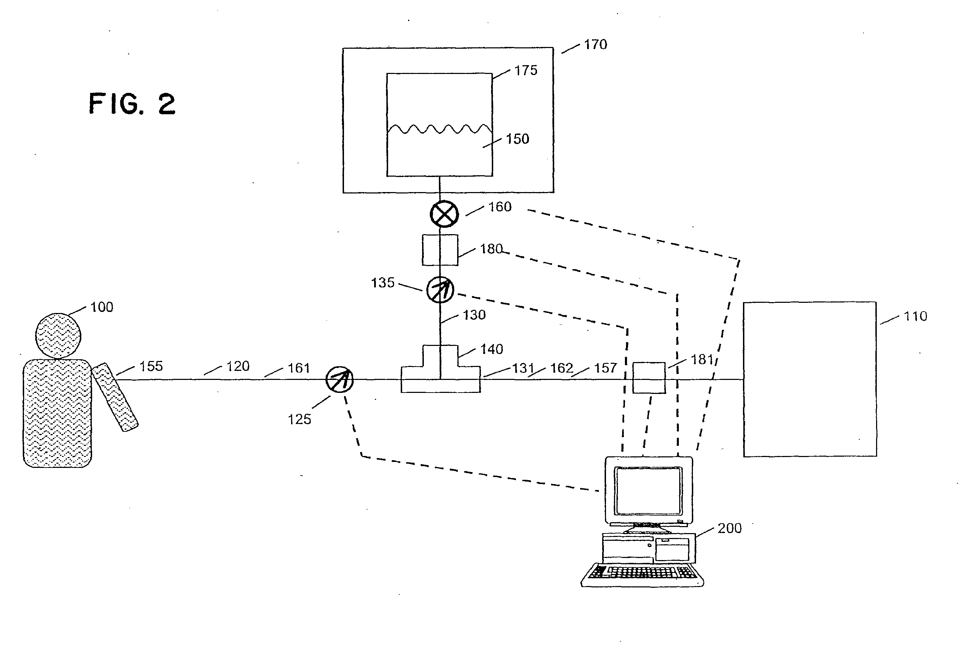

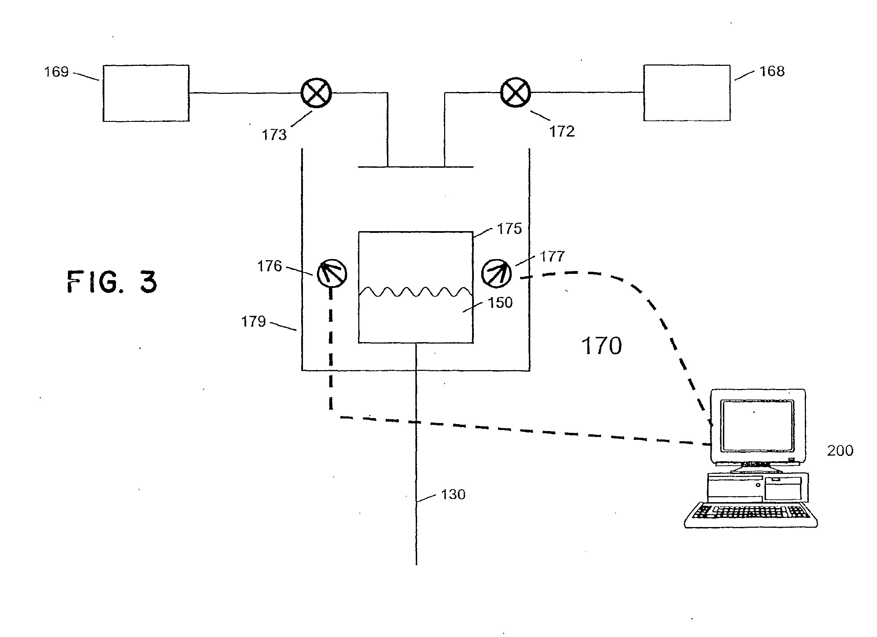

In particular, an anti-coagulant may be combined extracorporeally with a patient's blood to achieve a desired ratio of anti-coagulant to blood. Adding anti-coagulant to the blood prevents clotting and facilitates blood flow from a patient to an extracorporeal site. To achieve the objects and in accordance with the purpose of the invention, as embodied and broadly described herein, for example, Figures 2 and 3 depict a specific embodiment of the invention.

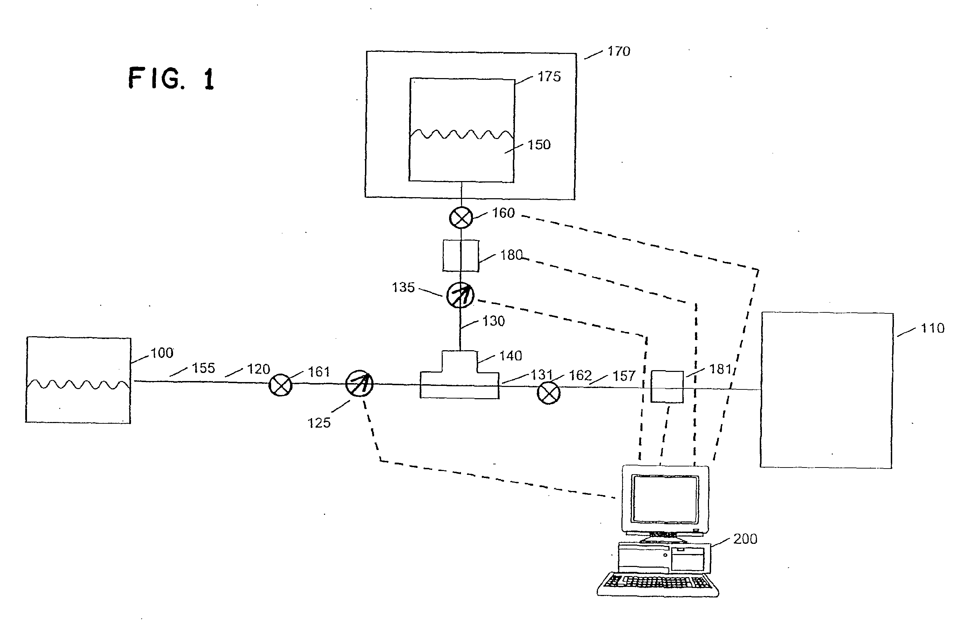

As shown in Figure 1, an apparatus of the present invention may comprise a first line 120 connected to first biological fluid reservoir 100. First line 120 may comprise a conventional IV line or cannula and associated needle, or any other flexible tubing, which is used to extract first biological fluid 155 from first biological fluid reservoir 100, and is connected to a second line 130 at conduit juncture 140. Second line 130 is a means by which second biological fluid 150 can be delivered to first biological fluid 155 flowing through first line 120 outside of first biological fluid reservoir 100. Both lines may be made of any type of flexible or rigid tubing (such as standard medical tubing) or other such device providing a sealed passageway for the flow of fluids into or out of a reservoir of any sort, and which preferably can be disposable and sterilizable.

Second biological fluid 150, which is in fluid connection with second line 130, is preferably stored in a flexible sealed chamber 175. Flexible sealed chamber 175 is preferably adapted to contain second biological fluid 150 and maintain a desired pressure and is further illustrated by Figure 3.

Second biological fluid 150 flows out of flexible sealed chamber 175 into second line 130 to valving means 160. Valving means 160 is configured to control the flow of second biological fluid 150 through second line 130 and may preferably be located between flexible chamber 175 and conduit juncture 140. Second biological fluid 150 continues to flow through second line 130 toward conduit juncture 140, where it then combines with first biological fluid 155.

Two flow measurement means, 125 and 135, are utilized to measure the flow of second biological fluid 150 and first biological fluid 155 through lines 120 and 130, respectively, before they combine at conduit juncture 140. Flow measurement means 125 and 135 may measure flow by any conventional means, e.g., by measuring the velocity of a particular particle in the flow stream or by taking a series of velocity measurements of the entire flow stream and using an integration process. Flow measurement means 125 and 135 are positioned on lines 120 and 130, respectively, preferably in close proximity to conduit juncture 140, and are preferably constructed of appropriate material to measure the flow of biological fluids and maintain the sterility of the system. Flow measurement means 125 and 135 may relay the collected flow rate information to control system 200.

In determining the ratio of second biological fluid 150 to first biological fluid 155, load cells can be utilized, configured such that they can measure the weight, mass, volume or other parameters of the fluid in the line they are affixed thereto; for example, in one preferred embodiment of the present invention, a weight measurement may be obtained using a normal strain gauge, more generally referred to herein as a type of load cell. Indeed, any means for determining the volume or weight of the fluids may be used so that their ratio after mixing or combination can be determined. Referring to Figure 1, second biological fluid 150 flows into a region of second line 130 that is weighed by load cell 180. Load cell 180 measures the displaced volume of second biological fluid 150 and provides feedback to control system 200. A second load cell 181 is placed on line 131 after conduit juncture 140 but before treatment site 110.

Second biological fluid 150 flows through valving means 160, flow measurement means 135 and by load cell 180 into conduit juncture 140, where it mixes with first biological fluid 155 flowing through line 120. Conduit juncture 140 is preferably made of a sterile material, similar to that used for lines 120 and 130, and may be Y-shaped. Alternatively, one-way valving means 161 and 162 may be placed before conduit juncture 140 on line 120 and line 130, respectively, to prevent backflow of second biological fluid 150, first biological fluid 155 or mixture 157.

The mixture of first biological fluid and second biological fluid 157 then flows out of conduit juncture 140 into line 131. Mixture 157 then flows into a region of line that is weighed by second load cell 181. Load cell 181 provides feedback to control system 200. The weight of the volume of displaced second biological fluid 150, as measured by first load cell 180, is subtracted from the measured weight of mixture 157, as measured by second load cell 181, by control system 200 to obtain the ratio of second biological fluid 150 to first biological fluid 155, the volume of second biological fluid consumed and the amount of first biological fluid processed. Control system 200 may be used to control, monitor and adjust the flow and pressure of second biological fluid 150 into line 130.

Figure 2 is a specific embodiment of the present invention which differs from that shown in Figure 1 in that the first biological fluid is blood 155, the first fluid reservoir 100 is a patient and the second biological fluid is anti-coagulant 150.

Figure 3 is a detailed schematic of the pressure means 170. Flexible sealed chamber 175 may have a pressure indicator 176 configured to relay pressure measurements to control system 200. A second indicator, pressure indicator 177, may be included for redundancy and safety. The flexible sealed chamber 175 may be disposed within an outer chamber 179. Outer chamber 179 may take many forms, including a rigid housing, and may be made of a myriad of materials including glass and the like. Outer chamber 179 may be situated and constructed such that it can contain a pressure sensitive medium such as a gas or other fluid, for example, air, which can exert pressure on flexible sealed chamber 175. Outer chamber 179 may be associated with pressure means 170, which is configured to adjust the pressure surrounding flexible sealed chamber 175 and thus the pressure on second biological fluid 150. Such means for increasing or decreasing pressure include, for example, exposing the flexible chamber 175 to reservoirs of gas or other pressurized fluids regulated at specific pressures or vacuum levels, or may take the form of a standard two valve system connected to a negative and positive pressure source.

In the depicted embodiment of the pressure means, the valving system may comprise two valving means (172 and 173). Valving means 172 may be in fluid connection at one end with outer chamber 179 and may be in fluid connection with positive pressure source 168 at the other end. Valving means 173 may be in fluid connection on one end with outer chamber 179 and may be in fluid connection with positive pressure source 169 on the other end. Pressure sources 168 and 169 preferably may be one or more pressure pumps. Each valve (172 or 173) is opened or closed to adjust the pressure within outer chamber 179.

For example, positive pressure source 168 may create positive pressure which is then controlled by valving means 172 which will allow the appropriate amount of pressure into outer chamber 179, which in turn, exerts pressure on flexible sealed chamber 175. Ultimately, flexible sealed chamber 175 exerts pressure on second biological fluid 150, causing it to flow. Negative pressure source 169 may create negative pressure, controlled by valving means 173, which allows the appropriate amount of pressure into outer chamber 179, which in turn exerts pressure on flexible sealed chamber 175. Ultimately, flexible sealed chamber 175 exerts pressure on second biological fluid 150. The positive and negative pressure are preferably balanced to maintain a steady flow of second biological fluid 150.

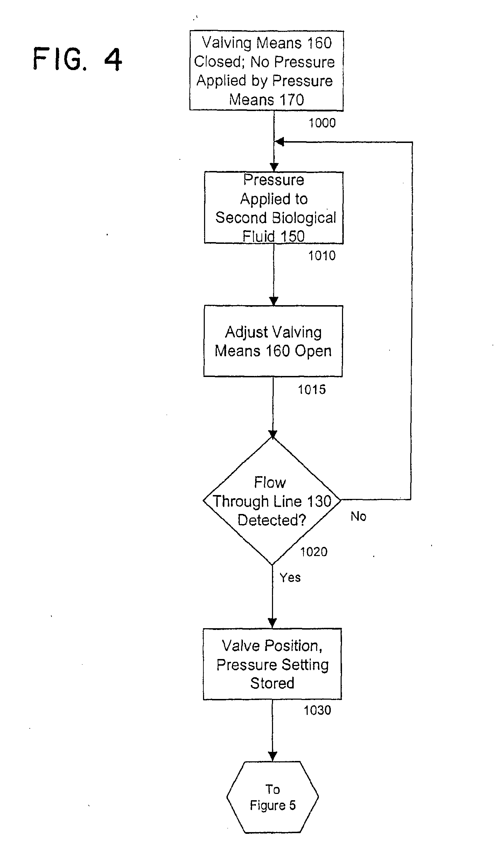

Figures 4, 5, 6, and 7 provide flowcharts of exemplary steps used with the present invention for the flow-proportioning algorithms. In the present invention, as depicted in Figure 4, the operator begins calibration of valving means 160. Initially, valving means 160 is closed and the flexible sealed chamber 175 is not pressurized. In step 1010, pressure is applied by pressure means 170 to flexible sealed chamber 175 which applies pressure to second biological fluid 150. In step 1015, valving means 160 may be opened through the use of control system 200, and second biological fluid 150 begins to flow through line 130. Once the flow of second biological fluid 150 is detected by control system 200 in step 1020, the position of valving means 160 allowing the flow is recorded and stored by control system 200 and the pressure setting that causes the fluid to begin to flow past valving means 160 into line 130 is recorded and stored in control system 200 as the nominal pressure needed within flexible sealed chamber 175 to cause second biological fluid to flow in step 1030.

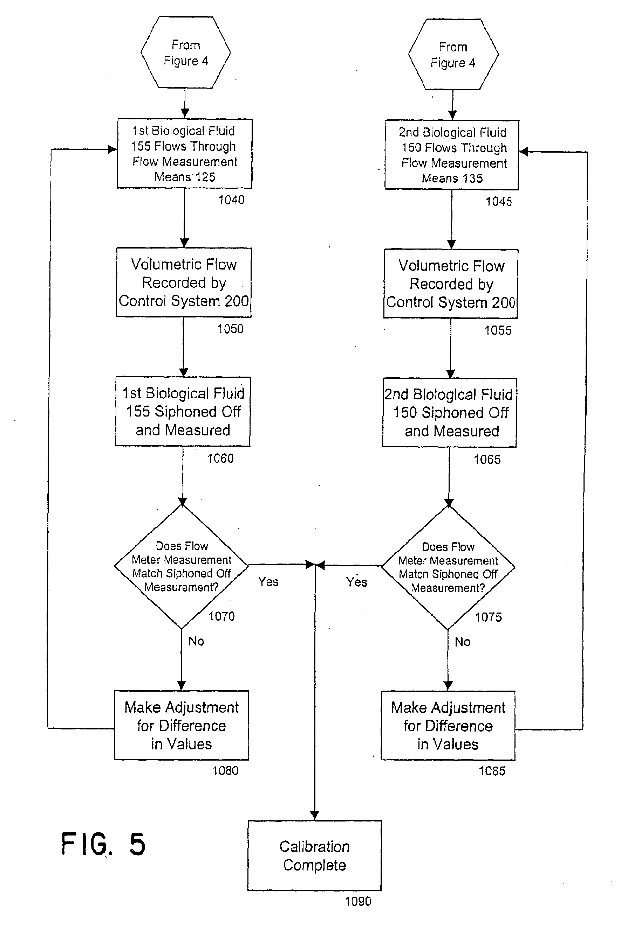

Similarly, flow measurement means 125 and 135 may be calibrated as illustrated in Figure 5. In step 1040, first biological fluid 155 flows through flow measurement means 125 associated with line 120; this flow rate is measured, recorded, and stored by control system 200 as a predicted value in step 1050. The first biological fluid 155 measured by flow measurement means 125 may then be siphoned from the system and measured in step 1060 to obtain its volume by conventional means. The predicted volume is then compared to the actual volume: if the actual and predicted volumes are within an acceptable tolerance of each other, the system is calibrated. If the two volumes are not within an acceptable tolerance of each other, the difference between the actual and predicted volume is used to adjust flow measurement means 125 in step 1080, and the calibration of flow measurement means 125 preferably may be repeated until the difference between the actual and predicted volumes is within a desired tolerance. In a preferred embodiment, the desired tolerance may be, for example, between +/- 1% to +/- .01%. Indeed, one skilled in the art would be able to ascertain an appropriate tolerance, depending upon the specific application of the present invention.

Similarly, second biological fluid 150 flows through flow measurement means 135 associated with line 130 in step 1045. This flow rate is measured, recorded and stored by control system 200 as a predicted volume in step 1055. The second biological fluid 150 measured by flow measurement means 135 may be siphoned from the system and measured in step 1065 to obtain its volume by conventional means. The predicted volume is then compared to the actual volume: if the actual and predicted volumes are within an acceptable tolerance of each other, the system is calibrated. In a preferred embodiment, the desired tolerance may be, for example, between +/-1% to +/- .01%. Again, one skilled in the art would be able to ascertain an appropriate tolerance, depending upon the specific application of the present invention. If the two volumes are not within an acceptable tolerance of each other, the difference between the actual and predicted volume is used to adjust flow measurement means 135 in step 1085, and the calibration of flow measurement means 135 preferably may be repeated until the difference between the actual and predicted volumes is within a desired tolerance.

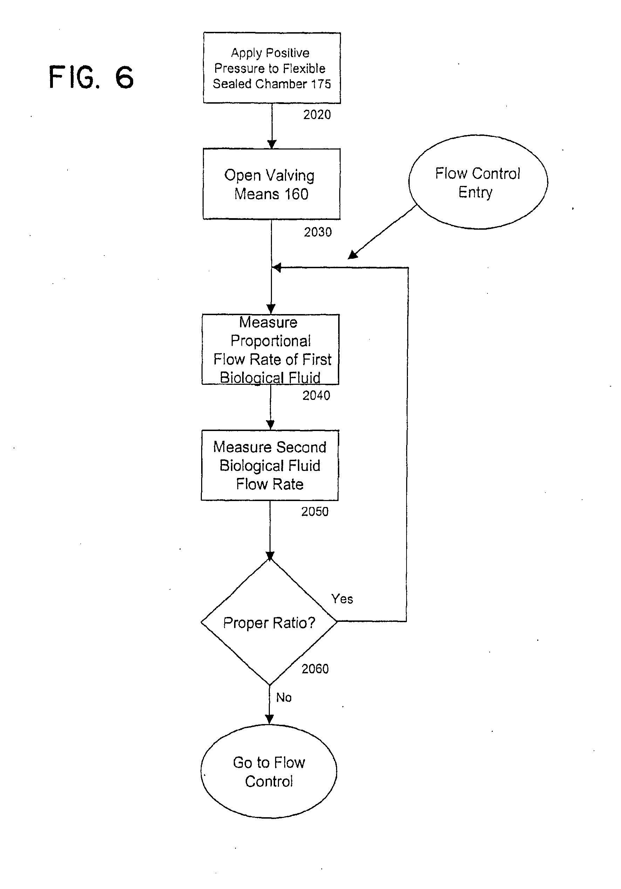

Figure 6 is a flowchart diagram that demonstrates the process associated with the present invention. In Figure 6, first biological fluid 155 begins to flow from first fluid reservoir 100 through first line 120. In step 2020, pressure means 170 applies positive pressure to flexible sealed chamber 175, or in an alternative embodiment the natural force of gravity may pull the second biological fluid out of flexible sealed chamber 175 through second line 130 into valving means 160. In step 2030, valving means 160 opens and second biological fluid 150 begins to flow through valving means 160 toward load cell 180. The weight of the displaced volume of second biological fluid 150 is obtained by load cell 180. The flow rate of first biological fluid 155 through line 120 into conduit juncture 140 is measured in step 2040 by flow measurement means 125 and the flow rate of second biological fluid 150 through line 130 into conduit juncture 140 is measured in step 2050 by flow measurement means 135, preferably before each of the fluids reach conduit juncture 140. Once first biological fluid 155 and second biological fluid 150 combine at conduit juncture 140, mixture 157 is formed. Load cell 181 measures the weight of the amount of mixture 157 found within a specific linear portion of line 131. The measurements obtained by load cells 180 and 181 are used to calculate the ratio of second biological fluid 150 to first biological fluid 155 in mixture 157. In a preferred embodiment, the ratio of first biological fluid 155 to second biological fluid 150 is preferably about 10:1. This ratio may be adjusted by one skilled in the art to satisfy specific applications.

The measurements taken by load cells 180 and 181 are relayed to control system 200 which subtracts the volume of second biological fluid 150 measured by load cell 180 from the volume of mixture 157 measured by load cell 181 to obtain the precise volume of first biological fluid 155 in mixture 157. The volume of first biological fluid 155 in mixture 157 is then compared to the volume of second biological fluid 150 relative to the volume of mixture 157 as measured by load cell 181. Once the exact ratio of first biological fluid 155 to second biological fluid 150 is determined, this ratio is compared to the desired ratio and any pre-determined tolerance in step 2060. If the actual ratio is not within the tolerance of the desired ratio then the flow rate of second biological fluid 150 preferably is adjusted. If the ratio is within the pre-determined range, which, for example, may be between +/-10% to +/-.01%, the algorithm returns to step 2040 and monitors the system.

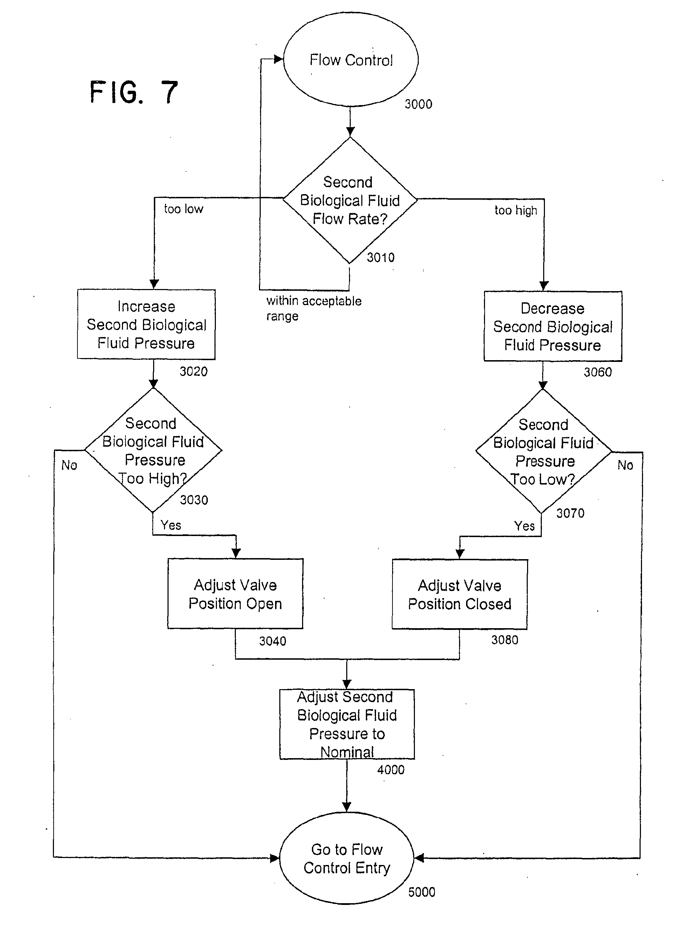

If the flow rate of second biological fluid 150 is not within the pre-determined range, it may be adjusted in step 3000 as illustrated by the flowchart of Figure 7. When the flow rate of second biological fluid 150 is too low it is brought into an acceptable range in steps 3020, 3030 and 3040. For example, in step 3020, the pressure of second biological fluid 150 may be increased via pressure means 170. Next, the adjusted pressure is measured in step 3030 to ensure that pressure has not been over-compensated. Step 3040 compensates for possible over-compensation by adjusting valving means 160 to an open position. If the second biological fluid flow rate is too high, steps 3060-3080 are preferred. First, in step 3060, pressure of second biological fluid 150 is reduced by pressure means 170. Next, the adjusted pressure is monitored in step 3070 to ensure that pressure has not been under-compensated. Step 3080 compensates for possible under-compensation by adjusting valving means 160 to a closed position. After adjustments are made to obtain an second biological fluid flow rate that ensures a proper ratio between first biological fluid 155 and second biological fluid 150, the second biological fluid pressure is adjusted to the nominal level in step 4000. The last step, step 5000, returns the system back to the flow control entry portion of the system.

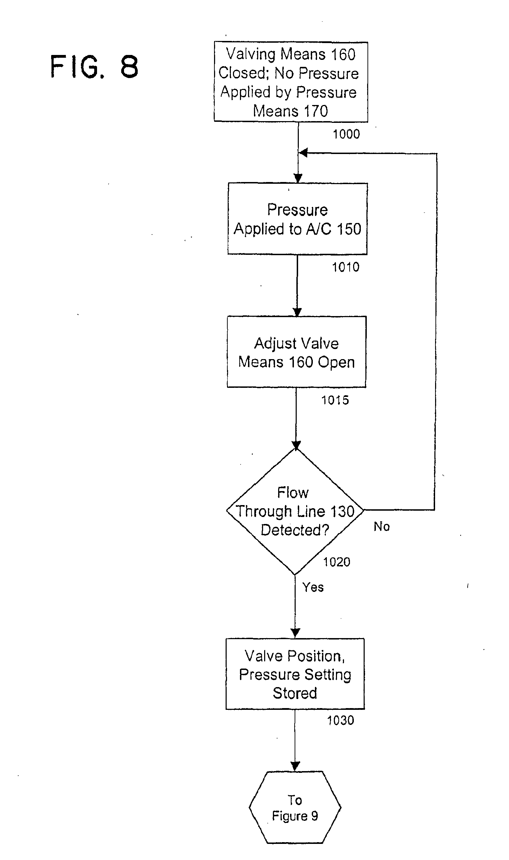

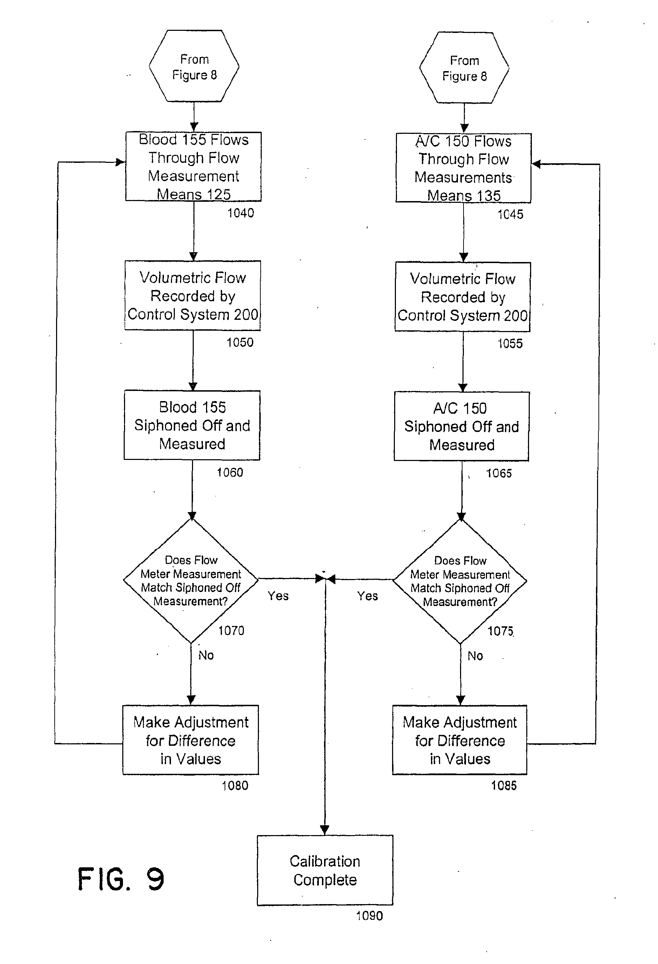

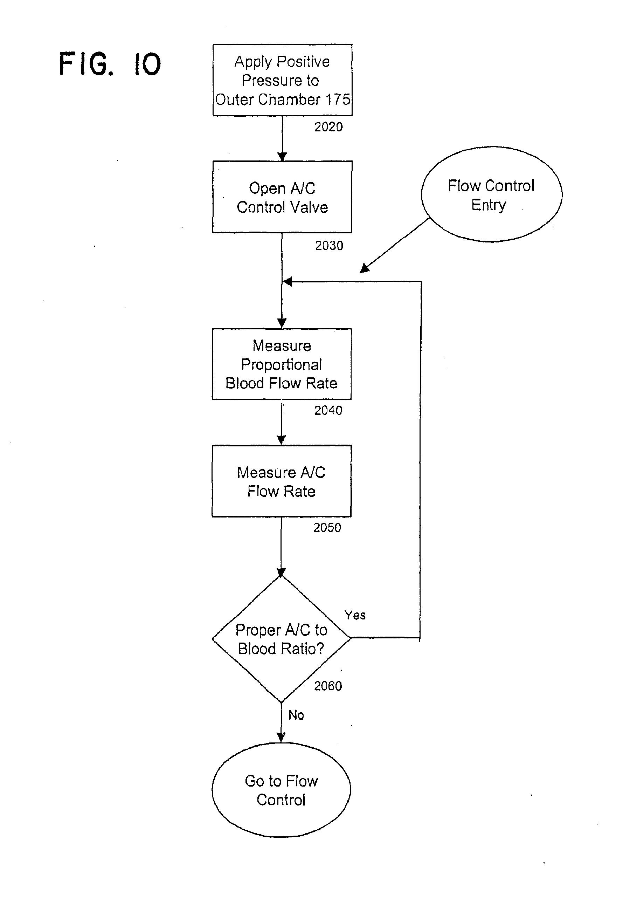

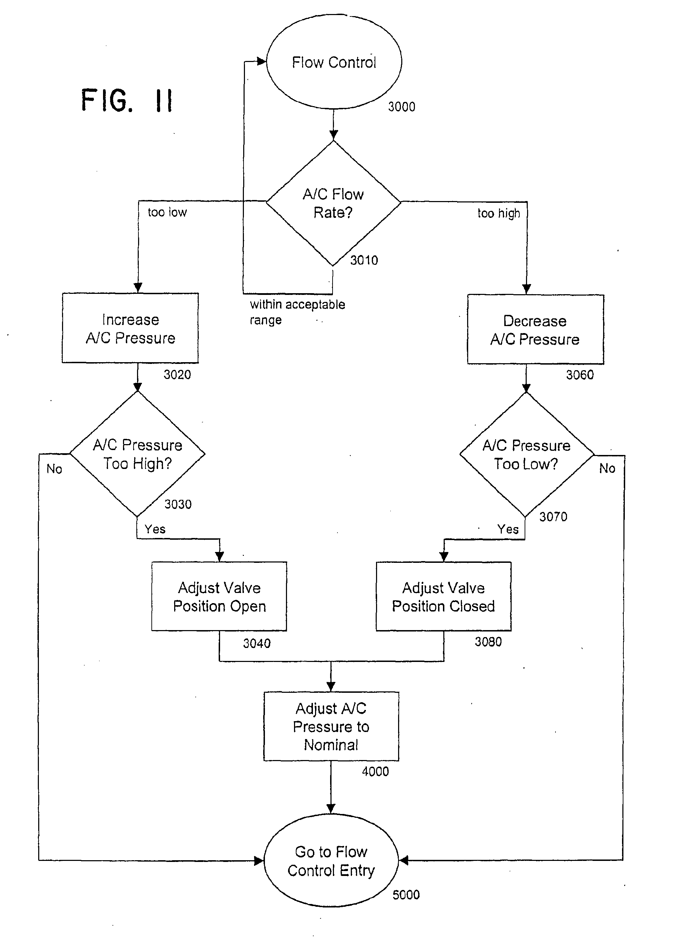

Figures 8, 9, 10 and 11 provide flowcharts of exemplary steps used in a specific embodiment of the present invention for flow-proportioning algorithms. Figures 8, 9, 10 and 11 parallel figures 4, 5, 6 and 7; the first biological fluid is shown as blood 155 and the second biological fluid is shown as anti-coagulant 150.

The above system mechanisms are preferably operated via a digital control system 200 that provides a means of electronically activating valving means 160 and pressure means 170 and may also include electronic circuitry and a microprocessor coupled to any necessary indicators and including an input for command control signals. Control system 200 may also receive and transmit data to and from possible pressure indicators, flow indicators, valving means, microprocessors and any other electronic data transport means, and may be configured in various ways depending upon the degree of control and information needed in a particular application.

Control system 200 is optionally arranged to monitor the entire process and obtain data regarding the mixture created. The user may then download information for statistical product analysis and obtain system diagnostics information for maintenance and repair purposes. This arrangement may include a setup program that allows the user to modify various variables that will be used by the control system in determining mix ratio, mechanism calibration, error tolerances, etc. The arrangement may also provide a means to automate or direct a user in the preliminary calibration of any relevant instrumentation.

It will be apparent to those skilled in the art that various modifications and variations can be made in the method and apparatus of the present invention and in the construction of the control system without departing from the scope of the spirit of the invention. As an example, the method and apparatus of the present invention can apply to any use that relates to combining two fluids in a desired ratio, such as but not limited to: anti-coagulant proportioning, heart-lung machines, chemotherapy or photopheresis applications such as those claimed and described in WO 97/36581.

## Claims

1. A method for combining a first biological fluid with a second biological fluid to produce a mixture of said first and second biological fluids, comprising the steps of:
measuring the flow rate of said first biological fluid in the flow of said first biological fluid;
measuring the flow rate of said second biological fluid in the flow of said second biological fluid;
measuring the weight of at least said second biological fluid;
measuring the weight of said mixture of first and second biological fluids in order to calculate a weight ratio of said second biological fluid to said first biological fluid;
calculating a weight ratio of said second biological fluid to said first biological fluid;
adjusting the flow rate of said second biological fluid based on said calculated weight ratio, so that a desired ratio of said second biological fluid to said first biological fluid is obtained; and
maintaining said desired ratio of said second biological fluid to said first biological fluid after said adjusting step.

2. The method of claim 1, wherein said maintaining step further comprises monitoring said flow rate of said second biological fluid to maintain said desired ratio.

3. The method of claim 1, wherein said adjusting said flow of said second biological fluid decreases or increases said flow rate of said second biological fluid.

4. The method of claim 1, wherein said adjusting step uses computer means for adjusting said flow of said second biological fluid.

5. The method of claim 1, wherein said means for adjusting said flow of said second biological fluid further comprises a valving means.

6. The method of claim 1, wherein said means for adjusting said flow of said second biological fluid further comprises a pressure means for increasing or decreasing said flow rate of said second biological fluid.

7. The method of claim 6, wherein said increasing said flow of said second biological fluid comprises adjusting said pressure means so that said flow rate of said second biological fluid is increased.

8. The method of claim 6, wherein said decreasing said flow of said second biological fluid comprises adjusting said pressure means so that said flow rate of said second biological fluid is decreased.

9. The method of claim 5, wherein said adjusting said flow of said second biological fluid comprises adjusting said valving means so that said flow rate of said second biological fluid is increased or decreased.

10. The method of claim 5, further comprising the step of calibrating said valving means prior to said adjusting step.

11. The method of claim 10, wherein said calibrating step comprises placing said valving means in a cracking position.

12. A system for maintaining a process combining a first biological fluid with a second biological fluid to produce a mixture of said first and second biological fluids, comprising:
means (125) for measuring the flow rate of said first biological fluid in the flow of said first biological fluid;
means (135) for measuring the flow rate of said second biological fluid in the flow of said second biological fluid;
means (180) for measuring the weight of at least said second biological fluid;
means (181) for measuring the weight of said mixture of first and second biological fluids in order to calculate a weight ratio of said second biological fluid to said first biological fluid;
means (200) for calculating a weight ratio of said second biological fluid to said first biological fluid;
means (160, 170, 200) for adjusting the said flow rate of said second biological fluid into said first biological fluid based on said calculated weight ratio to obtain a desired ratio of said second biological fluid to said first biological fluid; and
means (200) for maintaining said desired ratio of said second biological fluid to said first biological fluid.

13. The system of claim 12, wherein said means (125, 135) for obtaining said flow rate of said first biological fluid and said second biological fluid comprises a flow measurement means.

14. The system of claim 13, wherein said flow measurement means (125, 135) is calibrated prior to said obtaining of said flow rates of said first biological fluid and said second biological fluid.

15. The system of claim 12, wherein said means for adjusting said second biological fluid comprises a valving means (160).

16. The system of claim 15, wherein said valving means (160) is calibrated prior to said adjusting of said second biological fluid flow rate.

17. The system of claim 12, wherein said means for adjusting said second biological fluid comprises a pressure means (170) for increasing or decreasing said flow rate of said second biological fluid.

18. The system of claim 12, wherein said means for adjusting said second biological fluid comprises a controller (200) in communication with a flow measurement means (135), a valving means (160), a load cell (180), and a pressure means (170), wherein said controller (200) comprises a computer that regulates and controls said flow measurement means, said valving means, said load cell, and said pressure means.

19. The system of claim 12, wherein said means for maintaining said flow rate of said first biological fluid and said means for maintaining said second biological fluid into said first biological fluid comprises a controller (200) in communication with a flow measurement means (125, 135), a valving means (160, 162), a load cell (180, 181), and a pressure means (170), wherein said controller (200) comprises a computer that regulates and controls said flow measurement means, said valving means, said load cell, and said pressure means.

20. The system according to one of claims 12 to 19 further comprising:
a computer processor,
a memory which is operatively coupled to the computer processor; and
a computer process stored in said memory which executes in the computer processor and which includes:
an obtainer configured to obtain the flow rates of said first and second biological fluids;
a controller (200) configured to calculate a weight ratio of said second biological fluid to said first biological fluid;
a controller (200) configured to adjust said flow rate of said second biological fluid based on said calculated weight ratio to obtain a desired ratio of said second biological fluid to said first biological fluid; and
a controller (200) configured to maintain said desired ratio of said second biological fluid to said first biological fluid.

21. The system of claim 20, wherein said obtainer configured to measure said flow rate of said first biological fluid and said flow rate of said second biological fluid comprises a flow measurement means (125, 135) placed in the flow of said first and second biological fluids respectively.

22. The system of claim 20, wherein said controller (200) configured to adjust said flow rate of said second biological fluid controls a valving means (160).

23. The system of claim 20, wherein said controller (200) configured to adjust said flow rate of said second biological fluid controls a pressure means (170) for increasing or decreasing said flow rate of said second biological fluid.

24. The system of claim 23, wherein said pressure means for said increasing or decreasing said flow rate of said second biological fluid comprises a valving means (160).

25. The system of claim 23, wherein said pressure means for said increasing or decreasing said flow rate of said second biological fluid comprises a pressure indicator means.

26. The system of claim 20, wherein said controller (200) is in communication with a flow measurement means (125, 135), a valving means (160, 161, 162), a load cell (180, 181), and a pressure means (170).

27. The method of claim 1, wherein said first biological fluid is the same fluid as said second biological fluid.

28. The method of claim 1, wherein said first or second biological fluid comprises blood.

29. The method of claim 28, wherein said first or second biological fluid comprises anti-coagulant.

30. The systems of claim 17 and claim 23, wherein said pressure means (170) for said increasing or decreasing said flow rate of said second biological fluid comprises a negative or a positive pressure source (175).

31. The systems of claim 30, wherein said pressure source (175) for said increasing or decreasing said flow rate of said second biological fluid comprises a pressure pump.

32. The systems of claim 17 and claim 23, wherein said pressure means (170) for said increasing or decreasing said flow rate of said second biological fluid comprises a valving means (160) or a pressure indicator means.

33. The systems of claim 12 and claim 20, wherein said means for adjusting said flow rate of said second biological fluid comprises a load cell.

## Patentansprüche

1. Verfahren zum Vereinigen einer ersten biologischen Flüssigkeit mit einer zweiten biologischen Flüssigkeit, um ein Gemisch der ersten und zweiten biologischen Flüssigkeit herzustellen, welches die folgenden Schritte umfasst:
Messen der Fließrate der ersten biologischen Flüssigkeit im Fluss der ersten biologischen Flüssigkeit;
Messen der Fließrate der zweiten biologischen Flüssigkeit im Fluss der zweiten biologischen Flüssigkeit;
Messen des Gewichts von mindestens der zweiten biologischen Flüssigkeit;
Messen des Gewichts des Gemisches von erster und zweiter Flüssigkeit, um ein Gewichtsverhältnis der zweiten biologischen Flüssigkeit zu der ersten biologischen Flüssigkeit zu errechnen;
Errechnen eines Gewichtsverhältnisses der zweiten biologischen Flüssigkeit zu der ersten biologischen Flüssigkeit;
Angleichen der Fließrate der zweiten biologischen Flüssigkeit auf Grundlage des errechneten Gewichtsverhältnisses, so dass ein gewünschtes Verhältnis der zweiten biologischen Flüssigkeit zu der ersten biologischen Flüssigkeit erhalten wird; und
Beibehalten des gewünschten Verhältnisses der zweiten biologischen Flüssigkeit zu der ersten biologischen Flüssigkeit nach dem Angleichungsschritt.

2. Verfahren nach Anspruch 1, wobei der Beibehaltungsschritt ferner das Kontrollieren der Fließrate der zweiten biologischen Flüssigkeit zum Beibehalten des gewünschten Verhältnisses umfasst.

3. Verfahren nach Anspruch 1, wobei das Angleichen des Flusses der zweiten biologischen Flüssigkeit die Fließrate der zweiten biologischen Flüssigkeit senkt oder erhöht.

4. Verfahren nach Anspruch 1, wobei der Angleichungsschritt Computerhilfsmittel zum Angleichen des Flusses der zweiten biologischen Flüssigkeit verwendet.

5. Verfahren nach Anspruch 1, wobei das Hilfsmittel zum Angleichen des Flusses der zweiten biologischen Flüssigkeit ferner ein Ventilhilfsmittel umfasst.

6. Verfahren nach Anspruch 1, wobei das Hilfsmittel zum Angleichen des Flusses der zweiten biologischen Flüssigkeit ferner ein Druckhilfsmittel zum Erhöhen oder Senken der Fließrate der zweiten biologischen Flüssigkeit umfasst.

7. Verfahren nach Anspruch 6, wobei das Erhöhen des Flusses der zweiten biologischen Flüssigkeit das Angleichen des Druckhilfsmittels umfasst, so dass die Fließrate der zweiten biologischen Flüssigkeit erhöht wird.

8. Verfahren nach Anspruch 6, wobei das Senken des Flusses der zweiten biologischen Flüssigkeit das Angleichen des Druckhilfsmittels umfasst, so dass die Fließrate der zweiten biologischen Flüssigkeit gesenkt wird.

9. Verfahren nach Anspruch 5, wobei das Angleichen des Flusses der zweiten biologischen Flüssigkeit das Angleichen des Ventilhilfsmittels umfasst, so dass die Fließrate der zweiten biologischen Flüssigkeit erhöht oder gesenkt wird.

10. Verfahren nach Anspruch 5, das ferner den Schritt des Kalibrierens des Ventilhilfsmittels vor dem Angleichungsschritt umfasst.

11. Verfahren nach Anspruch 10, wobei der Kalibrierungsschritt das Platzieren des Ventilhilfsmittels in eine Spaltstellung umfasst.

12. System zum Beibehalten eines Verfahrens, bei dem eine erste biologische Flüssigkeit mit einer zweiten biologischen Flüssigkeit vereint wird zum Herstellen eines Gemischs der ersten und zweiten biologischen Flüssigkeit, das Folgendes umfasst:
Hilfsmittel (125) zum Messen der Fließrate der ersten biologischen Flüssigkeit im Fluss der ersten biologischen Flüssigkeit;
Hilfsmittel (135) zum Messen der Fließrate der zweiten biologischen Flüssigkeit im Fluss der zweiten biologischen Flüssigkeit;
Hilfsmittel (180) zum Messen des Gewichts von mindestens der zweiten biologischen Flüssigkeit;
Hilfsmittel (181) zum Messen des Gewichts des Gemisches von erster und zweiter biologischer Flüssigkeit, um ein Gewichtsverhältnis der zweiten biologischen Flüssigkeit zu der ersten biologischen Flüssigkeit zu errechnen;
Hilfsmittel (200) zum Errechnen eines Gewichtsverhältnisses der zweiten biologischen Flüssigkeit zu der ersten biologischen Flüssigkeit;
Hilfsmittel (160, 170, 200) zum Angleichen der Fließrate der zweiten biologischen Flüssigkeit an die erste biologische Flüssigkeit auf Grundlage des errechneten Gewichtsverhältnisses, um ein gewünschtes Verhältnis der zweiten biologischen Flüssigkeit zu der ersten biologischen Flüssigkeit zu erhalten; und
Hilfsmittel (200) zum Beibehalten des gewünschten Verhältnisses der zweiten biologischen Flüssigkeit zu der ersten biologischen Flüssigkeit.

13. System nach Anspruch 12, wobei das Hilfsmittel (125, 135) zum Erhalten der Fließrate der ersten biologischen Flüssigkeit und der zweiten biologischen Flüssigkeit ein Hilfsmittel zur Flussmessung umfasst.

14. System nach Anspruch 13, wobei das Hilfsmittel zur Flussmessung (125, 135) vor dem Erhalt der Fließraten der ersten biologischen Flüssigkeit und der zweiten biologischen Flüssigkeit kalibriert wird.

15. System nach Anspruch 12, wobei das Hilfsmittel zum Angleichen der zweiten biologischen Flüssigkeit ein Ventilhilfsmittel (160) umfasst.

16. System nach Anspruch 15, wobei das Ventilhilfsmittel (160) vor dem Angleichen der Fließrate der zweiten biologischen Flüssigkeit kalibriert wird.

17. System nach Anspruch 12, wobei das Hilfsmittel zum Angleichen der zweiten biologischen Flüssigkeit ein Druckhilfsmittel (170) umfasst zum Erhöhen oder Senken der Fließrate der zweiten biologischen Flüssigkeit.

18. System nach Anspruch 12, wobei das Hilfsmittel zum Angleichen der zweiten biologischen Flüssigkeit einen Regler (200) umfasst, der in Verbindung mit einem Hilfsmittel zur Flussmessung (135), einem Ventilhilfsmittel (160), einer Druckmessdose (180) und einem Druckhilfsmittel (170) steht, wobei der Regler (200) einen Computer umfasst, der das Hilfsmittel zur Flussmessung, das Ventilhilfsmittel, die Druckmessdose und das Druckhilfsmittel reguliert und kontrolliert.

19. System nach Anspruch 12, wobei das Hilfsmittel zum Beibehalten der Fließrate der ersten biologischen Flüssigkeit und das Hilfsmittel zum Beibehalten der zweiten biologischen Flüssigkeit in der ersten biologischen Flüssigkeit einen Regler (200) umfasst, der in Verbindung mit einem Hilfsmittel zur Flussmessung (125, 135), einem Ventilhilfsmittel (160, 162), einer Druckmessdose (180, 181) und einem Druckhilfsmittel (170) steht, wobei der Regler (200) einen Computer umfasst, der das Hilfsmittel zur Flussmessung, das Ventilhilfsmittel, die Druckmessdose und das Druckhilfsmittel reguliert und kontrolliert.

20. System nach einem der Ansprüche 12 bis 19, das ferner Folgendes umfasst:
einen Computerprozessor,
einen Speicher, der operativ an den Computerprozessor gekoppelt ist; und
einen Computerprozess, der in dem Speicher gespeichert ist und in dem Computerprozessor ausgeführt wird und der Folgendes umfasst:
eine Ermittlungseinrichtung, die so konfiguriert ist, dass sie die Fließraten der ersten und zweiten biologischen Flüssigkeit ermittelt;
einen Regler (200), der so konfiguriert ist, dass er ein Gewichtsverhältnis der zweiten biologischen Flüssigkeit zu der ersten biologischen Flüssigkeit errechnet;
einen Regler (200), der so konfiguriert ist, dass er die Fließrate der zweiten biologischen Flüssigkeit auf Grundlage des errechneten Gewichtsverhältnisses angleicht, um ein gewünschtes Verhältnis der zweiten biologischen Flüssigkeit zu der ersten biologischen Flüssigkeit zu erhalten; und
einen Regler (200), der so konfiguriert ist, dass das gewünschte Verhältnis der zweiten biologischen Flüssigkeit zu der ersten biologischen Flüssigkeit beibehalten wird.

21. System nach Anspruch 20, wobei die Ermittlungseinrichtung, die so konfiguriert ist, dass sie die Fließrate der ersten biologischen Flüssigkeit und die Fließrate der zweiten biologischen Flüssigkeit misst, ein Hilfsmittel zur Flussmessung (125, 135) umfasst, welches im Fluss der ersten beziehungsweise zweiten biologischen Flüssigkeit angeordnet ist.

22. System nach Anspruch 20, wobei der Regler (200), der so konfiguriert ist, dass er die Fließrate der zweiten biologischen Flüssigkeit anpasst, ein Ventilhilfsmittel (160) kontrolliert.

23. System nach Anspruch 20, wobei der Regler (200), der so konfiguriert ist, dass er die Fließrate der zweiten biologischen Flüssigkeit anpasst, ein Druckhilfsmittel (170) kontrolliert zum Erhöhen oder Senken der Fließrate der zweiten biologischen Flüssigkeit.

24. System nach Anspruch 23, wobei das Druckhilfsmittel zum Erhöhen oder Senken der Fließrate der zweiten biologischen Flüssigkeit ein Ventilhilfsmittel (160) umfasst.

25. System nach Anspruch 23, wobei das Druckhilfsmittel zum Erhöhen oder Senken der Fließrate der zweiten biologischen Flüssigkeit ein Druckanzeigehilfsmittel umfasst.

26. System nach Anspruch 20, wobei der Regler (200) in Verbindung steht mit einem Hilfsmittel zur Flussmessung (125, 135), einem Ventilhilfsmittel (160, 161, 162), einer Druckmessdose (180, 181) und einem Druckhilfsmittel (170).

27. Verfahren nach Anspruch 1, wobei die erste biologische Flüssigkeit die gleiche Flüssigkeit ist wie die zweite biologische Flüssigkeit.

28. Verfahren nach Anspruch 1, wobei die erste oder zweite biologische Flüssigkeit Blut umfasst.

29. Verfahren nach Anspruch 28, wobei die erste oder zweite biologische Flüssigkeit ein Antikoagulans umfasst.

30. Systeme nach Anspruch 17 und Anspruch 23, wobei das Druckhilfsmittel (170) zum Erhöhen oder Senken der Fließrate der zweiten biologischen Flüssigkeit eine negative oder eine positive Druckquelle (175) umfasst.

31. Systeme nach Anspruch 30, wobei die Druckquelle (175) zum Erhöhen oder Senken der Fließrate der zweiten biologischen Flüssigkeit eine Druckpumpe umfasst.

32. Systeme nach Anspruch 17 und Anspruch 23, wobei das Druckhilfsmittel (170) zum Erhöhen oder Senken der Fließrate der zweiten biologischen Flüssigkeit ein Ventilhilfsmittel (160) oder ein Druckanzeigehilfsmittel umfasst.

33. Systeme nach Anspruch 12 und Anspruch 20, wobei das Hilfsmittel zum Angleichen der Fließrate der zweiten biologischen Flüssigkeit eine Druckmessdose umfasst.

## Revendications

1. Procédé destiné à combiner un premier fluide biologique avec un deuxième fluide biologique pour produire un mélange desdits premier et deuxième fluides biologiques, comportant les étapes consistant à :
mesurer le débit dudit premier fluide biologique dans l'écoulement dudit premier fluide biologique ;
mesurer le débit dudit deuxième fluide biologique dans l'écoulement dudit deuxième fluide biologique ;
mesurer le poids d'au moins ledit deuxième fluide biologique ;
mesurer le poids dudit mélange de premier et deuxième fluides biologiques afin de calculer un rapport de poids dudit deuxième fluide biologique audit premier fluide biologique ;
calculer un rapport de poids dudit deuxième fluide biologique audit premier fluide biologique ;
régler le débit dudit deuxième fluide biologique sur la base dudit rapport de poids calculé, de telle façon qu'un rapport souhaité dudit deuxième fluide biologique audit premier fluide biologique soit obtenu ; et
maintenir ledit rapport souhaité dudit deuxième fluide biologique audit premier fluide biologique après ladite étape de réglage.

2. Procédé selon la revendication 1, ladite étape de maintien comportant en outre une surveillance dudit débit dudit deuxième fluide biologique pour maintenir ledit rapport souhaité.

3. Procédé selon la revendication 1, ledit réglage dudit écoulement dudit deuxième fluide biologique diminuant ou augmentant ledit débit dudit deuxième fluide biologique.

4. Procédé selon la revendication 1, ladite étape de réglage utilisant des moyens informatiques pour régler ledit écoulement dudit deuxième fluide biologique.

5. Procédé selon la revendication 1, lesdits moyens de réglage dudit écoulement dudit deuxième fluide biologique comportant en outre un moyen de robinetterie.

6. Procédé selon la revendication 1, lesdits moyens de réglage dudit écoulement dudit deuxième fluide biologique comportant en outre un moyen de pression servant à diminuer ou à augmenter ledit débit dudit deuxième fluide biologique.

7. Procédé selon la revendication 6, ladite augmentation dudit écoulement dudit deuxième fluide biologique comportant un réglage dudit moyen de pression de telle façon que ledit débit dudit deuxième fluide biologique soit augmenté.

8. Procédé selon la revendication 6, ladite diminution dudit écoulement dudit deuxième fluide biologique comportant un réglage dudit moyen de pression de telle façon que ledit débit dudit deuxième fluide biologique soit diminué.

9. Procédé selon la revendication 5, ledit réglage dudit écoulement dudit deuxième fluide biologique comportant un réglage dudit moyen de robinetterie de telle façon que ledit débit dudit deuxième fluide biologique soit augmenté ou diminué.

10. Procédé selon la revendication 5, comportant en outre l'étape consistant à étalonner ledit moyen de robinetterie préalablement à ladite étape de réglage.

11. Procédé selon la revendication 10, ladite étape d'étalonnage comportant l'étape consistant à placer ledit moyen de robinetterie dans une position entrouverte.

12. Système destiné à entretenir un processus combinant un premier fluide biologique avec un deuxième fluide biologique pour produire un mélange desdits premier et deuxième fluides biologiques, comportant :
un moyen (125) servant à mesurer le débit dudit premier fluide biologique dans l'écoulement dudit premier fluide biologique ;
un moyen (135) servant à mesurer le débit dudit deuxième fluide biologique dans l'écoulement dudit deuxième fluide biologique ;
un moyen (180) servant à mesurer le poids d'au moins ledit deuxième fluide biologique ;
un moyen (181) servant à mesurer le poids dudit mélange de premier et deuxième fluides biologiques afin de calculer un rapport de poids dudit deuxième fluide biologique audit premier fluide biologique ;
un moyen (200) servant à calculer un rapport de poids dudit deuxième fluide biologique audit premier fluide biologique ;
des moyens (160, 170, 200) servant à régler ledit débit dudit deuxième fluide biologique entrant dans ledit premier fluide biologique sur la base dudit rapport calculé de poids pour obtenir un rapport souhaité dudit deuxième fluide biologique audit premier fluide biologique ; et
un moyen (200) servant à maintenir ledit rapport souhaité dudit deuxième fluide biologique audit premier fluide biologique.

13. Système selon la revendication 12, lesdits moyens (125, 135) d'obtention dudit débit dudit premier fluide biologique et dudit deuxième fluide biologique comportant un moyen de mesure d'écoulement.

14. Système selon la revendication 13, ledit moyen (125, 135) de mesure d'écoulement étant étalonné préalablement à ladite obtention desdits débits dudit premier fluide biologique et dudit deuxième fluide biologique.

15. Système selon la revendication 12, ledit moyen de réglage dudit deuxième fluide biologique comportant un moyen (160) de robinetterie.

16. Système selon la revendication 15, ledit moyen (160) de robinetterie étant étalonné préalablement audit réglage dudit débit de deuxième fluide biologique.

17. Système selon la revendication 12, ledit moyen de réglage dudit deuxième fluide biologique comportant un moyen (170) de pression servant à diminuer ou à augmenter ledit débit dudit deuxième fluide biologique.

18. Système selon la revendication 12, ledit moyen de réglage dudit deuxième fluide biologique comportant une commande (200) en communication avec un moyen (135) de mesure d'écoulement, un moyen (160) de robinetterie, une cellule dynamométrique (180) et un moyen (170) de pression, ladite commande (200) comportant un ordinateur qui régule et commande ledit moyen de mesure d'écoulement, ledit moyen de robinetterie, ladite cellule dynamométrique et ledit moyen de pression.

19. Système selon la revendication 12, ledit moyen de maintien dudit débit dudit premier fluide biologique et ledit moyen de maintien dudit deuxième fluide biologique entrant dans ledit premier fluide biologique comportant une commande (200) en communication avec un moyen (125, 135) de mesure d'écoulement, un moyen de robinetterie (160, 162), une cellule dynamométrique (180, 181) et un moyen (170) de pression, ladite commande (200) comportant un ordinateur qui régule et commande ledit moyen de mesure d'écoulement, ledit moyen de robinetterie, ladite cellule dynamométrique et ledit moyen de pression.

20. Système selon l'une des revendications 12 à 19, comportant en outre :
un processeur d'ordinateur,
une mémoire couplée fonctionnellement au processeur d'ordinateur ; et
un processus informatique conservé dans ladite mémoire, qui s'exécute dans le processeur d'ordinateur et qui comprend :
un module d'obtention configuré pour obtenir les débits desdits premier et deuxième fluides biologiques ;
une commande (200) configurée pour calculer un rapport de poids dudit deuxième fluide biologique audit premier fluide biologique ;
une commande (200) configurée pour régler ledit débit dudit deuxième fluide biologique sur la base dudit rapport calculé de poids afin d'obtenir un rapport souhaité dudit deuxième fluide biologique audit premier fluide biologique ; et
une commande (200) configurée pour maintenir ledit rapport souhaité dudit deuxième fluide biologique audit premier fluide biologique.

21. Système selon la revendication 20, ledit module d'obtention configuré pour mesurer ledit débit dudit premier fluide biologique et ledit débit dudit deuxième fluide biologique comportant un moyen (125, 135) de mesure d'écoulement placé respectivement dans l'écoulement desdits premier et deuxième fluides biologiques.

22. Système selon la revendication 20, ladite commande (200) configurée pour régler ledit débit dudit deuxième fluide biologique commandant un moyen (160) de robinetterie.

23. Système selon la revendication 20, ladite commande (200) configurée pour régler ledit débit dudit deuxième fluide biologique commandant un moyen (170) de pression servant à diminuer ou à augmenter ledit débit dudit deuxième fluide biologique.

24. Système selon la revendication 23, ledit moyen de pression servant à ladite diminution ou à ladite augmentation dudit débit dudit deuxième fluide biologique comportant un moyen (160) de robinetterie.

25. Système selon la revendication 23, ledit moyen de pression servant à ladite diminution ou à ladite augmentation dudit débit dudit deuxième fluide biologique comportant un moyen indicateur de pression.

26. Système selon la revendication 20, ladite commande (200) étant en communication avec un moyen (125, 135) de mesure d'écoulement, un moyen (160, 161, 162) de robinetterie, une cellule dynamométrique (180, 181) et un moyen (170) de pression.

27. Procédé selon la revendication 1, ledit premier fluide biologique étant le même fluide que ledit deuxième fluide biologique.

28. Procédé selon la revendication 1, ledit premier ou ledit deuxième fluide biologique comportant du sang.

29. Procédé selon la revendication 28, ledit premier ou ledit deuxième fluide biologique comportant un anticoagulant.

30. Systèmes selon la revendication 17 et la revendication 23, ledit moyen (170) de pression servant à ladite augmentation ou à ladite diminution dudit débit dudit deuxième fluide biologique comportant une source (175) de pression négative ou positive.

31. Systèmes selon la revendication 30, ladite source (175) de pression servant à ladite augmentation ou à ladite diminution dudit débit dudit deuxième fluide biologique comportant une pompe foulante.

32. Systèmes selon la revendication 17 et la revendication 23, ledit moyen (170) de pression servant à ladite augmentation ou à ladite diminution dudit débit dudit deuxième fluide biologique comportant un moyen (160) de robinetterie ou un moyen indicateur de pression.

33. Systèmes selon la revendication 12 et la revendication 20, ledit moyen de réglage dudit débit dudit deuxième fluide biologique comportant une cellule dynamométrique.
